# EUROPÄISCHE PATENTSCHRIFT

(11) **EP 3 701 605 B1**
(45) Veröffentlichungstag und Bekanntmachung des Hinweises auf die Patenterteilung: **04.01.2023**
(21) Anmeldenummer: 18795429.2
(22) Anmeldetag: 23.10.2018
(51) Int. Cl.: H02G 3/06

(54) **VERFAHREN ZUR HERSTELLUNG EINER EXPLOSIONSGESCHÜTZTEN LEITUNGSDURCHFÜHRUNG UND EXPLOSIONSGESCHÜTZTE LEITUNGSDURCHFÜHRUNG**
METHOD FOR PRODUCING AN EXPLOSION-PROOF LINE BUSHING, AND EXPLOSION-PROOF LINE BUSHING
PROCÉDÉ DE FABRICATION D'UN PASSAGE DE LIGNE ANTIDÉFLAGRANT ET PASSAGE DE LIGNE ANTIDÉFLAGRANT

(30) Priorität: 27.10.2017 DE 102017125205
(43) Veröffentlichungstag der Anmeldung: 02.09.2020
(73) Patentinhaber: R. Stahl Schaltgeräte GmbH, 74638 Waldenburg (DE)
(72) Erfinder: SEMRAU, Holger, 74589 Satteldorf (DE); KUTSCH, Maxim, 74081 Heilbronn (DE)
(74) Vertreter: Rüger Abel Patentanwälte PartGmbB
(86) Internationale Anmeldenummer: PCT/EP2018/079021
(87) Internationale Veröffentlichungsnummer: WO 2019/081498

(56) Entgegenhaltungen:
- DE-A1-102012 111 270
- DE-A1-102015 112 284
- DE-B- 1 262 402
- US-A1- 2016 076 673

## Beschreibung

Die Erfindung betrifft ein Verfahren zur Herstellung einer explosionsgeschützten Leitungsdurchführung. Die explosionsgeschützte Leitungsdurchführung dient dazu, eine Leitung mit wenigstens einem elektrischen und/oder optischen und/oder fluidischen Leiter explosionsgeschützt durch eine Öffnung zu führen, beispielsweise eine Wandöffnung eines explosionsgeschützten Gehäuses. Somit kann die Leitung aus einem explosionsgeschützten Bereich oder Gehäuse in eine explosionsgefährdete Atmosphäre geführt werden.

Die Leitung kann mehrere gleichartige oder verschiedenartige Leiter aufweisen. Beispielsweise kann sie wenigstens einen elektrischen Leiter und/oder wenigstens einen optischen Leiter. Zusätzlich oder alternativ wenigstens einen fluidischen Leiter vorzusehen.

Das Durchführen einer solchen Leitung von einem explosionsgeschützten Bereich in eine explosionsgefährdete Atmosphäre erfordert hohe Sorgfalt und Genauigkeit. Es muss sichergestellt werden, dass heiße Gase, Funken, Flammen oder andere Zündquellen nicht in die explosionsgefährdete Atmosphäre gelangen können. Entweder muss die Leitungsdurchführung die Bereiche hermetisch voneinander trennen oder die verbleibenden Spalte müssen in ihrem Querschnitt und ihre Länge derart ausgebildet sein, dass sie zünddurchschlagsicher sind. Das Einhalten der Spaltmaße eines zünddurchschlagsicheren Spalts erfordert eine hohe Fertigungsgenauigkeit beim Herstellen der Leitungsdurchführung. Für unterschiedliche Leitungen mit unterschiedlichen Querschnitten bzw. Querschnittsabmessungen müssen daher in der Regel Durchführungskörper mit genau angepassten Abmessungen bereitgestellt werden, durch die die Leitungen explosionsgeschützt hindurchgeführt werden können.

Eine Leitungsdurchführung ist beispielsweise aus DE 10 2012 111 270 A1 bekannt. Die Leitungsdurchführung hat einen von einer Außenhülse gebildeten Durchführungskörper mit einer Durchführungsöffnung und eine koaxial dazu angeordnete Innenhülse, durch die die Leitung hindurchgeführt ist. Der Durchführungskörper hat einen Krimpabschnitt aus plastisch verformbarem Material. Die Innenhülse ist elastisch verformbar. Durch Verformen des Krimpabschnitts des Durchführungskörpers wird eine elastische Verformung der Innenhülse erreicht. Zwischen der Leitung und der Innenhülse bzw. der Innenhülse und dem Durchführungskörper werden zünddurchschlagsichere Spalte gebildet.

DE 1 262 402 B offenbart ein Verfahren zur Herstellung zünddurchschlagsicherer Durchführungen für Steuerleitungen zwischen einem druckfesten Raum und einem Anschlussraum unter Verwendung von Gießharz. Hierzu wird die Bohrung zwischen dem druckfestgekapselten Raum und dem Anschlussraum zunächst mit kaltvulkanisierender Silikonkautschukmasse gegen den druckfesten Raum abgedichtet, so dass anschließend Gießharz in die Bohrung eingefüllt und ausgehärtet werden kann. Der Gießvorgang wird zweistufig durchgeführt, so dass die Schrumpfung des Gießharzes aus dem ersten Verguss kompensiert werden kann und sich keine Zünddurchschlagspalte bilden.

US 2016/0076673 A1 betrifft das Umwickeln eines Gegenstandes, beispielsweise eines Rohres oder Kabels, mit einem Polymerband, das sich bei Wärmezufuhr in Axialrich-Hauptantrag tung zusammenzieht und in Radialrichtung ausdehnt. Dadurch kann eine Abdichtung zwischen dem Gegenstand und einem Durchgangsloch hergestellt werden.

Ausgehend von diesem Stand der Technik ist es eine Aufgabe der vorliegenden Erfindung, eine explosionsgeschützte Leitungsdurchführung zu schaffen, die für unterschiedliche Leitungen einsetzbar ist.

Diese Aufgabe wird durch ein Verfahren mit den Merkmalen des Patentanspruches 1 gelöst.

Zu der explosionsgeschützten Leitungsdurchführung gehört ein plastisch verformbarer Durchführungskörper. Der Durchführungskörper besteht vorzugsweise aus einem Metall enthaltenden Material, insbesondere aus einer metallischen Legierung und vorzugsweise aus einer Stahllegierung. Der Durchführungskörper hat eine in einer Axialrichtung hindurchgehende Durchgangsöffnung, die insbesondere als zylindrischer Kanal ausgeführt sein kann.

Beim Herstellen der explosionsgeschützten Leitungsdurchführung wird zunächst eine vorgegebene definierte Menge eines Elastomermaterials auf einen Flächenabschnitt einer Außenfläche einer Leitung, z.B. einer Leitungsummantelung, aufgebracht. Bei der Leitung kann es sich beispielsweise um ein Kabel handeln. Die Menge des Elastomermaterials variiert zumindest abhängig von der Außenabmessung der Leitung. Die Außenabmessung des aufgebrachten Elastomermaterials ist dabei an jeder Stelle kleiner als die Innenabmessung der Durchgangsöffnung.

Die aufgebrachte Menge bzw. Masse des Elastomermaterials kann vorzugsweise stufenlos variiert werden, beispielsweise durch die Wahl der radialen Schichtdicke des Elastomermaterials und/oder der axialen Länge des Elastomermaterials variiert werden.

Das Elastomermaterial umschließt den Flächenabschnitt in Umfangsrichtung insbesondere vollständig ohne Lücken in Umfangsrichtung, so dass das Elastomermaterial eine hülsenförmige oder hohlzylinderförmige Gestalt aufweist, nachdem es auf den Flächenabschnitt aufgebracht wurde. Dadurch kann ein hülsenförmiger oder hohlzylinderförmiger Elastomerkörper gebildet werden. Dessen Dicke und axiale Länge kann variabel beim Herstellen der Leitungsdurchführung vorgegeben werden.

Anschließend wird die Leitung mit dem auf dem Flächenabschnitt aufgebrachten Elastomermaterial in der Durchgangsöffnung des Durchführungskörpers angeordnet. Vorzugsweise wird das Elastomermaterial in axialer Richtung in etwa mittig in der Durchgangsöffnung platziert.

Anschließend wird der Durchführungskörper plastisch verformt. Dabei wird ein zentraler Abschnitt des Durchführungskörpers gegen das Elastomermaterial gepresst, wobei sich das Elastomermaterial elastisch verformt und gegen die Außenfläche der Leitung drückt. Die axiale Länge des Elastomermaterials nimmt dabei zu, während die radiale Schichtdicke des Elastomermaterials abnimmt. Durch den äußeren Druck des Durchführungskörpers schließt das Elastomermaterial in seinem elastisch verformten Zustand verbleibende Spalte zwischen dem Elastomermaterial und dem Durchführungskörper sowie zwischen dem Elastomermaterial und der Außenfläche der Leitung vollständig oder teilweise derart, dass sowohl zwischen dem Elastomermaterial und dem Durchführungskörper als auch zwischen dem Elastomermaterial und der Leitung jeweils ein zünddurchschlagsicherer Spalt gebildet ist. Dabei können auch innerhalb der Leitung vorhandene Spalte, beispielsweise zwischen Adern eines mehradrigen Kabels, im Bereich des mittleren Abschnitts des Durchführungskörpers verringert oder geschlossen werden, so dass auch innerhalb der Leitung lediglich zünddurchschlagsichere Spalte verbleiben.

Die Menge bzw. Masse des aufgebrachten Elastomermaterials wird derart variabel vorgegeben, dass Leitungen mit unterschiedlicher Außenabmessung durch Durchführungskörper mit denselben Dimensionen hindurchgeführt und zünddurchschlagsicher verkrimpt werden können. Mit anderen Worten können Durchführungskörper derselben Größe für stark unterschiedliche Leitungsquerschnitte verwendet werden.

Durch die Erfindung ist es nicht erforderlich, eine Vielzahl von Durchführungskörpern unterschiedlicher Größe bereitzustellen, die sehr genau an die Größe der Leitungsquerschnitte der durchzuführenden Leitungen angepasst sind.

Das Elastomermaterial wird als bandförmiges Material bereitgestellt und auf den Flächenabschnitt der Außenfläche der Leitungsummantelung aufgewickelt. Dadurch kann die Menge bzw. Masse des Elastomermaterials situationsbedingt und vorzugsweise stufenlos angepasst werden.

Das Elastomermaterial wird vor dem vollständigen Ausvulkanisieren des Elastomermaterials auf den Flächenabschnitt der Außenfläche der Leitungsummantelung aufgebracht. Das Elastomermaterial vulkanisiert anschließend nach dem Aufbringen vollständig aus und bildet einen einheitlichen, integralen Elastomerkörper.

Bei einem bevorzugten Ausführungsbeispiel weist das Elastomermaterial Polyisobutylen auf. Das Elastomermaterial kann beispielsweise eine Kautschukmischung mit Polyisobutylen sein.

Es ist bevorzugt, wenn das Elastomermaterial in mehreren Lagen auf den Flächenabschnitt der Außenfläche der Leitungsummantelung aufgebracht wird. Die Anzahl der Lagen bestimmt die radiale Schichtdicke des Elastomermaterials. Vorzugsweise verbinden sich die unmittelbar aneinander anliegenden Lagen des Elastomermaterials durch ihren unmittelbaren Kontakt miteinander zu einem einzigen Elastomerkörper. Wenn das Elastomermaterial dabei als Elastomerband durch Umwickeln aufgebracht wird kann eine einzige Lage durch eine Umwicklung mit einem entsprechend breiten Elastomerband hergestellt werden oder, wenn das Elastomerband schmaler ist als die erforderliche axiale Länge des herzustellenden Elastomerkörpers, können mehrere Einzelwicklungen axial überlappend nebeneinander um den Flächenabschnitt gewickelt werden.

Durch Umwickeln mit mehreren sich axial überlappend Einzelwicklungen pro Lage, kann der sich bildende Elastomerkörper eine Mantelfläche mit Erhöhungen aufweisen, die durch die Überlappungen entstehen. Denn an diesen Stellen ist eine Lage dicker als außerhalb der überlappenden Einzelwicklungen. Es ist in diesem Fall vorteilhaft, wenn die maximale Höhe der Erhebungen gegenüber benachbarten Bereichen der Mantelfläche, die in etwa auf derselben Zylindermantelfläche liegen, kleiner ist als die Radiusänderung der Durchgangsöffnung im mittleren Abschnitt. Dadurch wird sichergestellt, dass auch bei einer Mantelfläche des Elastomerkörpers, die von einer idealen Zylindermantelfläche abweicht, nach dem Umformen des Durchführungskörpers keine Freiräume oder Spalte verbleiben, die die Zünddurchschlagsicherheit beeinträchtigen.

Das Elastomermaterial stellt bei einem Ausführungsbeispiel keine Klebeverbindung oder eine andere stoffschlüssige Verbindung mit der Außenfläche der Leitung her. Das Elastomermaterial wird lediglich kraft- oder reibschlüssig auf der Außenfläche gehalten.

Nach dem plastischen Verformen des Durchführungskörpers füllt das Elastomermaterial den Raum zwischen dem verformten Durchführungskörper und der Leitung im Wesentlichen vollständig aus. Das zwischen dem Durchführungskörper und der Leitungsummantelung verbleibende Volumen des Raums kann mindestens zu 95% oder mindesten zu 97% oder mindestens zu 99% durch das Elastomermaterial ausgefüllt sein. Die auf die Leitung ursprünglich aufgebrachte Masse des Elastomermaterials wird dementsprechend vorgegeben.

Es ist weiter vorteilhaft, wenn der verformte Durchführungskörper eine größere axiale Länge aufweist als das Elastomermaterial bzw. als der Elastomerkörper. Der verformte Durchführungskörper überragt das Elastomermaterial vorzugsweise auf beiden axialen Seiten, wenn die explosionsgeschützte Leitungsdurchführung hergestellt ist.

Es ist außerdem bevorzugt, wenn der Durchführungskörper derart verformt wird, dass die verformten axialen Endabschnitte eine kleinere Außenabmessung und/oder eine kleinere Innenabmessung aufweisen als der verformte zentrale Abschnitt des verformten Durchführungskörpers. Vorzugsweise liegen die Endbereiche des verformten Durchführungskörpers unmittelbar an der Leitungsummantelung an. Durch diese Ausführung kann die Dichtheit der Leitungsdurchführung verbessert und/oder zusätzlich ein Halten bzw. Klemmen der Leitung am Durchführungskörper erreicht werden, um eine Axialbewegung der Leitung relativ zum Durchführungskörper zu hemmen bzw. zu verhindern. Ein möglicherweise verbleibender Spalt zwischen den Endbereichen des verformten Durchführungskörpers und der Leitungsummantelung ist vorzugsweise frei von Elastomermaterial.

Es ist bevorzugt, wenn die beim plastischen Verformen des Durchführungskörpers verursachte Verringerung der Außenabmessung des mittleren Abschnitts unabhängig vom Außenquerschnitt der hindurchgeführten Leitung immer gleich groß ist. Dadurch kann erreicht werden, dass der verformte Durchführungskörper im mittleren Abschnitt eine Durchführungsaußenfläche mit definierter Form und definierter Abmessung aufweist. Diese Durchführungsaußenfläche kann zur Herstellung eines zünddurchschlagsicheren Spalts beim Anordnen des Durchführungskörpers in einer Wandöffnung oder dergleichen verwendet werden. Dabei kann es vorteilhaft sein, wenn die Durchführungsaußenfläche nach dem plastischen Verformen durch eine mechanische Bearbeitung wie Schleifen und/oder Schälen und/oder Rollen oder ein anderes geeignetes Verfahren nachbearbeitet wird, so dass die Ebenheit und die Toleranz das Herstellen eines zünddurchschlagsicheren Spalts ermöglicht.

Vorzugsweise entspricht die Durchführungsaußenfläche des verformten Durchführungskörpers im mittleren Abschnitt der Mantelfläche eines Zylinders.

In seinem unverformten Ausgangszustand kann der Durchführungskörper eine hohlzylindrische Form bzw. Hülsenform aufweisen.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele der Erfindung anhand der beigefügten Zeichnung im Einzelnen erläutert. Es zeigen:

Figuren 1-5 jeweils einen Schritt bei der Herstellung einer explosionsgeschützten Leitungsdurchführung unter Verwendung eines Ausführungsbeispiels eines Durchführungskörpers sowie Elastomermaterial und

Figuren 6 und 7 die Herstellung einer weiteren explosionsgeschützten Leitungsdurchführung unter Verwendung des Durchführungskörpers aus den Figuren 1-5 mit einer anderen Leitung größeren Durchmessers.

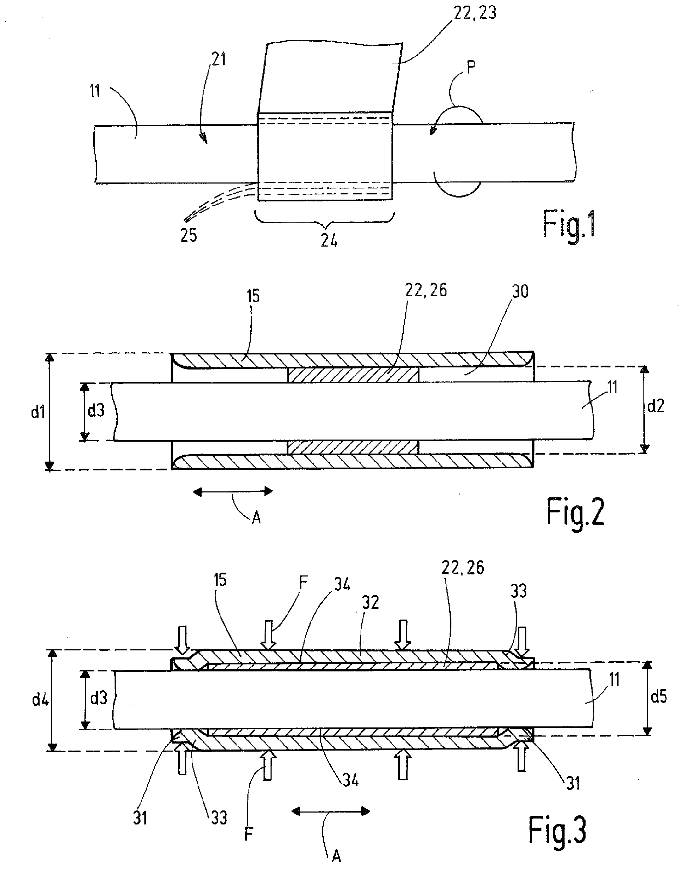

In den Figuren 1-5 ist schematisch die Herstellung einer explosionsgeschützten Leitungsdurchführung 10 veranschaulicht. Die explosionsgeschützte Leitungsdurchführung 10 dient dazu, eine Leitung 11 explosionsgeschützt durch eine Wand bzw. einen Wandabschnitt 12 hindurchzuführen. Die Wand bzw. der Wandabschnitt 12 trennt einen explosionsgeschützten Bereich oder Raum von einer explosionsgefährdeten Atmosphäre. Beispielsweise kann es sich um den Wandabschnitt 12 eines explosionsgeschützten Gehäuses handeln, insbesondere einer druckfesten Kapselung (Ex-d).

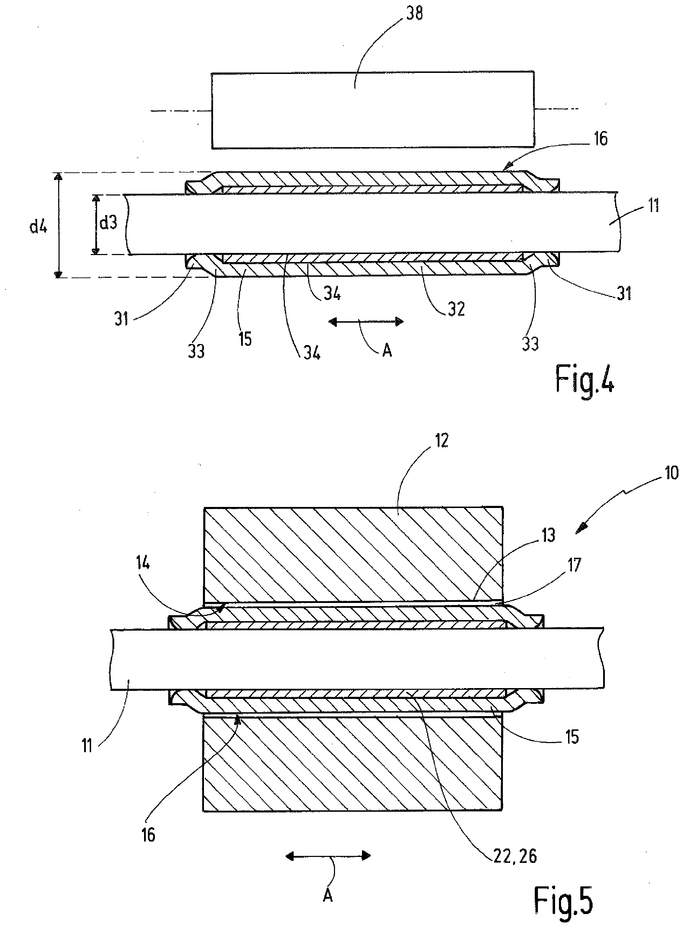

Im Wandabschnitt 12 ist eine Wandöffnung 13 vorhanden (Figur 5). Die Wandöffnung hat eine Wandöffnungsinnenfläche 14, die vorzugsweise einer Zylindermantelfläche entspricht. Zu der Leitungsdurchführung 10 gehört ein Durchführungskörper 15. Der Durchführungskörper 15 ist bei vollständig hergestellter explosionsgeschützter Leitungsdurchführung 10 (Figur 5) plastische verformt und/oder bearbeitet und bildet dadurch eine Durchführungsaußenfläche 16, die der Wandöffnung 13 bzw. der Wandöffnungsinnenfläche 14 zugeordnet ist. Beim Anordnen des die Durchführungsaußenfläche 16 aufweisenden Abschnitts des Durchführungskörpers 15 in der Wandöffnung 13 begrenzen die Wandöffnungsinnenfläche 14 und die Durchführungsaußenfläche 16 gemeinsam einen äußeren zünddurchschlagsicheren Spalt 17. Der äußere zünddurchschlagsichere Spalt 17 kann ringförmig geschlossen sein. Es ist auch möglich, dass der Durchführungskörper 15 an einer oder mehreren Stellen an der Wandöffnungsinnenfläche 14 anliegt, so dass der äußere zünddurchschlagsichere Spalt 17 im Querschnitt betrachtet nicht vollständig ringförmig geschlossen ist und eine ungleichmäßige Spaltdicke aufweist.

Bei hergestellter zünddurchschlagsicherer Verbindung zwischen dem Durchführungskörper 15 und dem Wandabschnitt 12 können Mittel vorgesehen sein, um die Positionierung der Durchführungsaußenfläche 16 in der Wandöffnung 13 sicherzustellen und aufrechtzuerhalten. Beispielsweise können Befestigungsmittel oder Sicherungsmittel vorhanden sein, um den Durchführungskörper 15 in der erforderlichen Relativlage am Wandabschnitt 12 zu halten bzw. zu sichern. Beispielsweise kann der Durchführungskörper 15 stoffschlüssig und/oder kraftschlüssig und/oder formschlüssig am Wandabschnitt 12 bzw. in der Wandöffnung 13 gesichert bzw. gehalten werden.

Zur Herstellung der Leitungsdurchführung 10 wird in einem ersten Schritt (Figur 1) ein Elastomermaterial auf eine Außenfläche 21 der Leitung 11 aufgebracht und beispielsgemäß aufgewickelt. Die Außenfläche 21 kann beispielsweise durch seine Außenfläche einer Leitungsummantelung gebildet sein. Die Leitung 11 kann wenigstens einen elektrischen Leiter und/oder wenigstens einen optischen Leiter und/oder wenigstens einen fluidischen Leiter aufweisen. Beispielsweise kann es sich um ein mehradriges Kabel handeln.

Das Elastomermaterial 22 wird beispielsgemäß in Form eines Elastomerbandes 23 oder in einer anderen geeigneten Form bereitgestellt, die ein stufenloses Variieren der Menge bzw. Masse des Elastomermaterials ermöglicht. Das Elastomerband 23 wird in einem Flächenabschnitt 24 der Außenfläche 21 in Umfangsrichtung um die Außenfläche 21 gewickelt, so dass das Elastomermaterial 22 die Leitung 11 im Flächenabschnitt 24 in Umfangsrichtung vollständig umschließt.

Das Elastomermaterial 22 wird in mehreren Lagen 25 im Flächenabschnitt 24 auf die Leitung 11 aufgebracht. Beim Ausführungsbeispiel ist jede Lage 25 durch eine oder mehrere axial nebeneinander angeordnete Umwicklungen mit dem Elastomerband 23 gebildet. Das Umwickeln der Leitung 11 mit dem Elastomerband 23 ist in Figur 1 schematisch durch den Pfeil P dargestellt.

Vorzugsweise hat jede Lage 25 dieselbe Dicke radial zur Erstreckungsrichtung der Leitung 11 bzw. in einer Axialrichtung A betrachtet, was beispielsweise dadurch erreicht werden kann, dass die Breite des Elastomerbandes der axialen Länge des Flächenabschnitts 24 entspricht, in dem das Elastomermaterial 22 aufgebracht wird.

Das Elastomermaterial 22 ist bevorzugt nicht vollständig ausvulkanisiert, wenn es auf die Leitung 11 aufgebracht wird. Während des Aufbringens des Elastomermaterials 22 gelangen unmittelbar benachbarte Lagen 25 in Kontakt zueinander und verbinden sich. Dadurch entsteht ein aus dem Elastomermaterial 22 hergestellter Elastomerkörper 26, der eine hohlzylindrische bzw. hülsenförmige Gestalt aufweist und die Leitung 11 im Bereich des Flächenabschnitts 24 umgibt. Eine Klebeverbindung oder stoffschlüssige Verbindung zwischen dem Elastomerkörper 26 und der Leitung 11 entsteht dabei nicht (Figur 2). Das Elastomermaterial 22 kann beispielsweise Polyisobutylen aufweisen.

Die Leitung 11 mit dem Elastomermaterial 22 bzw. dem Elastomerkörper 26 wird im nächsten Schritt durch eine Durchgangsöffnung 30 des Durchführungskörpers 15 hindurchgeführt (Figur 2). Die Durchgangsöffnung 30 durchsetzt den Durchführungskörper 15 in einer Axialrichtung A vollständig und hat beim Ausführungsbeispiel eine zylindrische Form. In Figur 2 ist der Durchführungskörper 15 in seinem unverformten Ausgangszustand veranschaulicht. Er hat beim Ausführungsbeispiel eine im Wesentlichen hohlzylindrische bzw. hülsenförmige Gestalt mit einer zylindermantelflächenförmigen Außen- und Innenfläche. Der Durchführungskörper 15 hat in seinem unverformten Ausgangszustand einen Außendurchmesser, der einem ersten Durchmesser d1 entspricht und einen Innendurchmesser, der einem zweiten Durchmesser d2 entspricht. Die Außenabmessung bzw. der Außendurchmesser des Elastomerkörpers 26 ist höchstens so groß und vorzugsweise kleiner als der zweite Durchmesser d2. Die Leitung 11 weist beim Ausführungsbeispiel einen Außendurchmesser auf, der einem dritten Durchmesser d3 entspricht.

In Axialrichtung A wird der Durchführungskörper 25 relativ zum Elastomerkörper 26 derart angeordnet, dass der Elastomerkörper 26 in etwa mittig in der Durchgangsöffnung 30 angeordnet ist, so wie es Figur 2 schematisch zeigt. Im nächsten Schritt wird der Durchführungskörper plastisch umgeformt. Mit einem geeigneten Krimpwerkzeug (nicht dargestellt) wird an mehreren in Umfangsrichtung um den Durchführungskörper gleichmäßig verteilt angeordneten Stellen eine Umformkraft F auf den Durchführungskörper 15 ausgeübt, die radial nach innen zur Leitung 11 hin gerichtet ist. Die Umformkraft F ist in Figur 3 schematisch durch Blockpfeile veranschaulicht.

Bei dem Umformen wird die Gestalt des Durchführungskörpers 15 verändert. Der umgeformte Durchführungskörper 15 (Figur 3) hat mehrere axiale Abschnitte, deren Form sich vom unmittelbar benachbarten axialen Abschnitt unterscheidet. Der umgeformte Durchführungskörper 15 hat beim Ausführungsbeispiel an jedem axialen Längsende jeweils einen Endabschnitt 31 und zwischen den beiden Endabschnitten 31 einen zentralen Abschnitt 32. Jeder Endabschnitt 31 kann über einen sich radial erweiternden oder konischen Verbindungsabschnitt 33 mit dem zentralen Abschnitt 32 verbunden sein.

Der zentrale Abschnitt 32 des umgeformten Durchführungskörpers 15 hat einen Außendurchmesser, der einem vierten Durchmesser d4 entspricht und der kleiner ist als der erste Durchmesser d1 im Ausgangszustand des Durchführungskörpers 15. Der zentrale Abschnitt 32 des umgeformten Durchführungskörpers 15 hat einen Innendurchmesser, der einem fünften Durchmesser d5 entspricht und der kleiner ist als der zweite Durchmesser d2 im Ausgangszustand des Durchführungskörpers 15. Der fünfte Durchmesser d5 ist größer als der dritte Durchmesser d3 der Leitung 11.

Beim Ausführungsbeispiel wird der Durchführungskörper 15 aus seinem Ausgangszustand derart umgeformt, dass der Außendurchmesser der Endabschnitte 31 kleiner ist als der vierte Durchmesser d4 des zentralen Abschnitts 32. Außerdem ist der Innendurchmesser der Endabschnitte 31 kleiner als der fünfte Durchmesser d5 des zentralen Abschnitts 32. An den Endabschnitten 31 kann der umgeformte Durchführungskörper 15 unmittelbar an der Außenfläche 21 der Leitung 11 anliegen und eine Klemmkraft auf die Leitung 11 ausüben. Dadurch wird eine Axialsicherung des Durchführungskörpers 15 und des Elastomerkörpers 26 relativ zur Leitung 11 erreicht.

Das im ersten Schritt auf die Leitung 11 aufgebrachte Elastomermaterial 22 hat eine definierte Masse, die so vorgegeben ist, dass sie das Volumen zwischen dem umgeformten Durchführungskörper 15 und der Leitung 11 im Wesentlichen ausfüllt. Das verbleibende Volumen bzw. der verbleibende Raum wird vorzugsweise mindestens zu 95% und weiter vorzugsweise mindestens zu 97% und weiter vorzugsweise mindestens zu 99% ausgefüllt. Die Masse des Elastomermaterials 22 ist insbesondere derart vorgegeben, dass sie den Bereich zwischen dem zentralen Abschnitt 32 des umgeformten Durchführungskörpers und der Leitung 11 vollständig ausfüllt.

Mit anderen Worten wird die Menge bzw. Masse des Elastomermaterials 22, das auf die Leitung 11 aufgebracht wird, abhängig vom Außendurchmesser der Leitung 11 (hier: dritter Durchmesser d3) und dem Innendurchmesser des umgeformten Durchführungskörpers 15 zumindest im zentralen Abschnitt 32 (hier: fünfter Durchmesser d5) und der axialen Länge des zentralen Abschnitts 32 des umgeformten Durchführungskörpers 15 bestimmt und vorgegeben. Dadurch ist es möglich, einen Durchführungskörper 15, der in seinem Ausgangszustand denselben Außendurchmesser und Innendurchmesser aufweist, für unterschiedliche Leitungsdurchmesser der Leitung 11 zu verwenden und bei der Herstellung der Leitungsdurchführung 10 die Masse des aufzubringenden Elastomermaterials 22 entsprechend anzupassen. Es hat sich gezeigt, dass dadurch Leitungen mit Außendurchmessern von etwa 8 mm bis 25 mm mit nur 8 oder 10 oder 12 unterschiedlichen Größen des Durchführungskörpers 15 explosionsgeschützt verkrimpt werden können.

Nach dem plastischen Umformen des Durchführungskörpers ist der Elastomerkörper 26 elastisch verformt und drückt sich gegen die Innenseite des zentralen Abschnitts 32 des umgeformten Durchführungskörpers und gegen die Außenseite 21 der Leitung 11. Dadurch werden verbleibende Zwischenräume zumindest teilweise geschlossen, so dass sowohl zwischen dem umgeformten Durchführungskörper 15 und dem Elastomerkörper 26 sowie zwischen dem Elastomerkörper 26 und der Leitung 11 jeweils ein innerer zünddurchschlagsicherer Spalt 34 gebildet ist.

Wenn das Elastomermaterial in mehreren Lagen 35 aufgebracht wurde und eine Lage 25 aus mehreren axial nebeneinander aufgebrachten Einzelwindungen besteht, die sich axial etwas überlappen, kann jede Lage 25 im wenigstens einen Überlappungsbereich der Einzelwindungen eine größere radiale Dicke aufweisen als außerhalb des Überlappungsbereichs. Aus diesem Grund oder wegen anderer herstellungsbedingter Gründe kann die sich ergebende Mantelfläche des Elastomermaterials 22 bzw. des Elastomerkörpers 26 Höhenabweichungen, insbesondere Erhebungen, gegenüber einer idealen Soll-Zylindermantelfläche aufweisen. Es ist in diesem Fall vorteilhaft, wenn alle Erhebungen eine radial zur Axialrichtung gemessene Höhe gegenüber der Soll-Zylindermantelfläche haben, die kleiner ist als die Radiusänderung der Durchgangsöffnung im mittleren Abschnitt 32.

Im zentralen Abschnitt 32 hat der umgeformte Durchführungskörper 15 die Durchführungsaußenfläche 16, die beim Ausführungsbeispiel die Form einer zylindrischen Mantelfläche aufweist. Um gemeinsam mit der Wandinnenfläche 14 den äußeren zünddurchschlagsicheren Spalt 17 zu bilden, kann die Durchführungsaußenfläche 16 nach dem plastischen Umformen des Durchführungskörpers 15 in einem weiteren Schritt bearbeitet werden, um eine vorgegebene Qualität bzw. Toleranz einzuhalten. Diese Bearbeitung ist stark schematisiert in Figur 4 veranschaulicht. Bei diesem Bearbeitungsschritt kann beispielsweise ein rotierendes Schleifwerkzeug 38 oder ein anderes geeignetes Bearbeitungswerkzeug verwendet werden, um die erforderliche Oberflächenqualität und Maßhaltigkeit der Durchgangsaußenfläche 16 zu erzeugen.

Schließlich kann der an der Leitung 11 angebrachte umgeformte Durchführungskörper 15, wie es eingangs im Zusammenhang mit Figur 5 beschrieben wurde, in der Wandöffnung 13 angeordnet und der äußere zünddurchschlagsichere Spalt 17 in der Wandöffnung 13 gebildet werden. Auf diese Weise kann die Leitung 11 durch die Wandöffnung 13 zünddurchschlagsicher hindurchgeführt werden. Weder zwischen dem Durchführungskörper 15 und der Leitung, noch zwischen dem Durchführungskörper 15 und der Wandöffnung 13 sind zünddurchschlagsichere Spalte 17, 34 vorhanden, so dass keine heißen Gase, Funken, Flammen oder andere Zündmittel in die explosionsgefährdete Atmosphäre gelangen können.

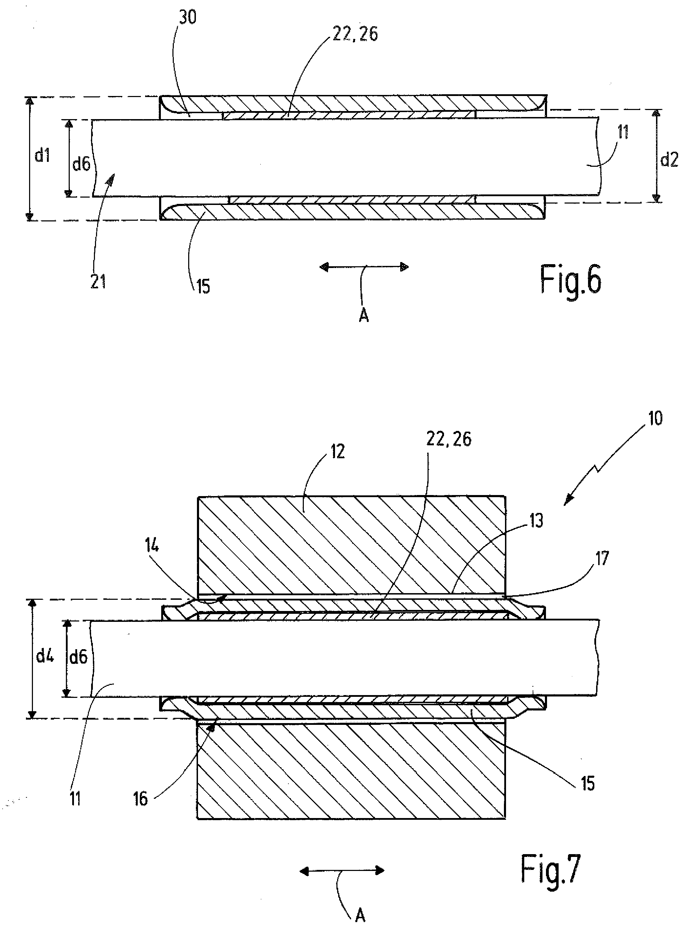

Die Variabilität der Verwendung des Durchführungskörpers 15 für unterschiedliche Leitungen 11 ist schematisch anhand der Figuren 6 und 7 verdeutlicht. Figur 6 zeigt den Durchführungskörper 15 aus Figur 2 in seinem Ausgangszustand mit einem Außendurchmesser, der dem ersten Durchmesser d1 entspricht und mit einem Innendurchmesser, der dem zweiten Durchmesser d2 entspricht. Die Leitung 11 hat hier einen Außendurchmesser, der einem sechsten Durchmesser d6 entspricht, wobei der sechste Durchmesser d6 größer ist als der dritte Durchmesser d3 der Leitung 11 aus Figur 2. Die Masse des aufgebrachten Elastomermaterials 22 wurde an das verringerte Volumen zwischen der Leitung 11 und dem umgeformten Durchführungskörper 15 (Figur 7) angepasst. Dadurch ist es möglich, Leitungen 11 mit unterschiedlichem Außendurchmesser mit jeweils dem gleichen Durchführungskörper 15 zünddurchschlagsicher zu verbinden.

Bei der hier beschriebenen Ausführungsform ist der äußere Zündspalt 17 durch zwei ebene zylindrische Flächen 14, 16 begrenzt. Alternativ hierzu könnte der äußere Zündspalt 17 auch Erhebungen und/oder Vertiefungen aufweisen. Beispielsweise kann ein Teil der Wandöffnung 13 durch ein Innengewinde und ein Teil des Durchführungskörpers 15 oder eines mit dem Durchführungskörper 15 verbindbaren Befestigungsmittels mit einem Außengewinde versehen sein, das in das Innengewinde der Wandöffnung 13 einschraubbar ist.

Die Erfindung betrifft ein Verfahren zur Herstellung einer explosionsgeschützten Leitungsdurchführung 10. Auf eine Leitung 11 wird eine vorgegebene Menge bzw. Masse eines Elastomermaterials aufgebracht, die die Leitung 11 in einem Flächenabschnitt 24 in Umfangsrichtung vollständig umschließt. Die Leitung 11 mit dem Elastomermaterial 22 wird in eine Durchgangsöffnung 30 eines Durchführungskörpers 15 eingesetzt. Der Durchführungskörper 15 wird vorzugsweise über seine gesamte axiale Länge plastisch verformt. Nach dem plastischen Verformen füllt das Elastomermaterial 22, das zwischen dem umgeformten Durchführungskörper 15 und der Leitung 11 verbleibende Volumen im Wesentlichen vollständig aus. Das Elastomermaterial 22 ist elastisch verformt und drückt sich sowohl an die Leitung 11 als auch an den umgeformten Durchführungskörper 15 an, so dass zünddurchschlagsichere Spalte 34 zwischen dem Durchführungskörper 15 und der Leitung 11 gebildet sind. Die aufgebrachte Masse des Elastomermaterials 22 wird abhängig von dem nach dem Umformen des Durchführungskörpers 15 verbleibenden inneren Volumen zwischen dem umgeformten Durchführungskörper 15 und der Leitung 11 bestimmt und vorgegeben. Somit hängt die Masse des Elastomermaterials 22 zumindest von der Außenabmessung der Leitung 11 ab. Durchführungskörper 15 mit denselben Dimensionen können daher für Leitungen 11 mit unterschiedlichen Außenabmessungen eingesetzt werden.

### Bezugszeichenliste:

- 10: Leitungsdurchführung
- 11: Leitung
- 12: Wandabschnitt
- 13: Wandöffnung
- 14: Wandöffnungsinnenfläche
- 15: Durchführungskörper
- 16: Durchführungsaußenfläche
- 17: äußerer zünddurchschlagsicherer Spalt

- 21: Außenfläche der Leitung
- 22: Elastomermaterial
- 23: Elastomerband
- 24: Flächenabschnitt
- 25: Lage des Elastomermaterials
- 26: Elastomerkörper

- 30: Durchgangsöffnung
- 31: Endabschnitt
- 32: zentraler Abschnitt
- 33: konischer Verbindungsabschnitt
- 34: innerer zünddurchschlagsicherer Spalt

- 38: Schleifwerkzeug

- A: Axialrichtung
- d1: erster Durchmesser
- d2: zweiter Durchmesser
- d3: dritter Durchmesser
- d4: vierter Durchmesser
- d5: fünfter Durchmesser
- d6: sechster Durchmesser
- F: Umformkraft

## Patentansprüche

1. Verfahren zur Herstellung einer explosionsgeschützten Leitungsdurchführung (10), mit folgenden Schritten:
- Bereitstellen eines plastisch umformbaren Durchführungskörpers (15) mit einer Durchgangsöffnung (30),
- Aufbringen einer vorgegebenen Menge eines Elastomermaterials (22) vor dem vollständigen Ausvulkanisieren des Elastomermaterials (22) auf einen Flächenabschnitt (24) einer Außenfläche (21) einer Leitung (11), wobei die Menge des aufzubringenden Elastomermaterials (22) zumindest abhängig von der Außenabmessung der Leitung (11) vorgegeben wird, und wobei das Elastomermaterial (22) als bandförmiges Material bereitgestellt und auf den Flächenabschnitt (24) der Außenfläche (21) der Leitung (11) aufgewickelt wird,
- vollständiges Ausvulkanisieren des Elastomermaterials (22) nach dem Aufbringen, um einen einheitlichen, integralen Elastomerkörper (26) zu bilden,
- Anordnen des Flächenabschnitts der Leitung (11) mit dem Elastomermaterial (22) in der Durchgangsöffnung (30) des Durchführungskörpers (15),
- plastisches Umformen des Durchführungskörpers (15), so dass ein umgeformter zentraler Abschnitt (32) des Durchführungskörpers (15) das Elastomermaterial (22) gegen die Außenfläche (21) der Leitung (11) drückt und elastisch verformt, so dass sowohl zwischen dem umgeformten Durchführungskörper (15) und dem Elastomermaterial (22) als auch zwischen dem Elastomermaterial (22) und der Leitung (11) jeweils ein zünddurchschlagsicherer Spalt (34) gebildet ist.

2. Verfahren nach Anspruch 1,
**dadurch gekennzeichnet, dass** das Elastomermaterial (22) in mehreren Lagen (25) auf den Flächenabschnitt (24) der Außenfläche (21) der Leitung (11) aufgebracht wird.

3. Verfahren nach Anspruch 2,
**dadurch gekennzeichnet, dass** sich die Lagen (25) des Elastomermaterials (22) durch den unmittelbaren Kontakt miteinander zu einem einzigen Elastomerkörper (26) verbinden.

4. Verfahren nach einem der vorhergehenden Ansprüche, **dadurch gekennzeichnet, dass** das Elastomermaterial (22) ohne Bildung einer stoffschlüssigen Verbindung mit der Leitung (11) auf den Flächenabschnitt (24) aufgebracht wird bzw. ist.

5. Verfahren nach einem der vorhergehenden Ansprüche, **dadurch gekennzeichnet, dass** das Elastomermaterial (22) den Flächenabschnitt (24) in Umfangsrichtung vollständig umschließt.

6. Verfahren nach einem der vorhergehenden Ansprüche, **dadurch gekennzeichnet, dass** das Elastomermaterial (22) den Raum zwischen dem umgeformten Durchführungskörper (15) und der Leitung (11) im Wesentlichen vollständig ausfüllt.

7. Verfahren nach einem der vorhergehenden Ansprüche, **dadurch gekennzeichnet, dass** der Durchführungskörper (15) derart umgeformt wird, dass die umgeformten axialen Endabschnitte (31) eine kleinere Außenabmessung aufweisen als der umgeformte zentrale Abschnitt (32) des Durchführungskörpers (15).

8. Verfahren nach einem der vorhergehenden Ansprüche, **dadurch gekennzeichnet, dass** der Durchführungskörper (15) derart umgeformt wird, dass die umgeformten axialen Endabschnitte (31) eine kleinere Innenabmessung aufweisen als der umgeformte zentrale Abschnitt (32) des Durchführungskörpers (15).

9. Verfahren nach einem der vorhergehenden Ansprüche, **dadurch gekennzeichnet, dass** die Endbereiche (31) des umgeformten Durchführungskörpers (15) unmittelbar an der Außenfläche (21) der Leitung (11) anliegen.

10. Verfahren nach einem der vorhergehenden Ansprüche, **dadurch gekennzeichnet, dass** die der umgeformte Durchführungskörper (15) eine größere axiale Länge aufweist als das Elastomermaterial (22).

11. Verfahren nach einem der vorhergehenden Ansprüche, **dadurch gekennzeichnet, dass** der Durchführungskörper (15) in seinem nicht umgeformten Ausgangszustand eine hohlzylindrische Form aufweist.

## Claims

1. Method for manufacturing an explosion-proof line bushing (10) with the following steps:
- providing a plastically deformable bushing body (15) having a passage opening (30),
- applying a predefined amount of elastomeric material (22) on a surface section (24) of an outer surface (21) of a line (11) prior to the complete vulcanization of the elastomeric material (22), wherein the amount of the elastomeric material (22) is predefined depending at least on the outer dimension of the line (11), and wherein the elastomeric material is provided as band shaped material and is wrapped on the surface section (24) of the outer surface (21) of the line (11),
- complete vulcanization of the elastomeric material (22) after application in order to form a uniform, integral elastomeric body (24),
- arranging of the surface section of the line (11) with the elastomeric material (22) in the passage opening (30) of the bushing body (15),
- plastically deforming the bushing body (15) such that a deformed central section (32) of the bushing body (15) elastically deforms and presses the elastomeric material (22) against the outer surface (21) of the line (11), so that between the deformed bushing body (15) and the elastomeric material (22) as well as the elastomeric material (22) and the line (11) a flameproof gap (34) is formed respectively.

2. Method according to claim 1, **characterized in that** the elastomeric material (22) is applied in multiple layers (25) on the surface section (24) of the outer surface (21) of the line (11).

3. Method according to claim 2, **characterized in that** due to the direct contact with each other the layers (25) of the elastomeric material (22) connect with each other to a singular elastomeric body (26).

4. Method according to any of the preceding claims, **characterized in that** the elastomeric material (22) is applied on the surface section (24) without creation of a substance bond with the line (11).

5. Method according to any of the preceding claims, **characterized in that** the elastomeric material (22) completely surrounds the surface section (24) in circumferential direction.

6. Method according to any of the preceding claims, **characterized in that** the elastomeric material (22) fills the space between the deformed bushing body (15) and the line (11) substantially completely.

7. Method according to any of the preceding claims, **characterized in that** the bushing body (15) is deformed so that the deformed axial end sections (31) have a smaller outer dimension than the deformed central section (32) of the bushing body (15).

8. Method according to any of the preceding claims, **characterized in that** the bushing body (15) is deformed so that the deformed axial end sections (31) have a smaller inner dimension than the deformed central section (32) of the bushing body (15).

9. Method according to any of the preceding claims, **characterized in that** the end sections (31) of the deformed bushing body (15) abut directly against the outer surface (21) of the line (11).

10. Method according to any of the preceding claims, **characterized in that** the deformed bushing body (15) has a larger axial length than the elastomeric material (22).

11. Method according to any of the preceding claims, **characterized in that** the bushing body (15) has a hollow cylindrical shape in its non-deformed initial condition.

## Revendications

1. Procédé de fabrication d'un passage de ligne ou câble antidéflagrant (10), comprenant les étapes suivantes :
- mise à disposition d'un corps de passage (15) déformable plastiquement et présentant une ouverture de passage (30),
- application d'une quantité prédéterminée d'un matériau élastomère (22), avant la vulcanisation complète du matériau élastomère (22), sur une portion de surface (24) d'une surface extérieure (21) d'un câble (11), la quantité du matériau élastomère (22) à appliquer étant prédéfinie au moins en fonction de la dimension extérieure du câble (11), et le matériau élastomère (22) étant mis à disposition sous forme de matériau en bande et étant enroulé sur la portion de surface (24) de la surface extérieure (21) du câble (11),
- vulcanisation complète du matériau élastomère (22) après application, en vue de former un corps élastomère (26) intégral uniforme,
- mise en place de la portion de surface du câble (11), avec le matériau élastomère (22), dans l'ouverture de passage (30) du corps de passage (15),
- formage plastique du corps de passage (15), de manière à ce qu'une portion centrale (32) mise en forme du corps de passage (15) presse le matériau élastomère (22) contre la surface extérieure (21) du câble (11) et le déforme élastiquement, de sorte qu'un joint antidéflagrant résistant au claquage (34) est formé respectivement aussi bien entre le corps de passage (15) mis en forme et le matériau élastomère (22) qu'entre le matériau élastomère (22) et le câble (11).

2. Procédé selon la revendication 1, **caractérisé en ce que** le matériau élastomère (22) est appliqué en plusieurs couches (25) sur la portion de surface (24) de la surface extérieure (21) du câble (11).

3. Procédé selon la revendication 2, **caractérisé en ce que**, du fait du contact direct, les couches (25) du matériau élastomère (22) se lient entre elles pour former un corps élastomère (26) unique.

4. Procédé selon l'une des revendications précédentes, **caractérisé en ce que** le matériau élastomère (22) est appliqué sur la portion de surface (24) sans formation d'une liaison par matière avec le câble (11).

5. Procédé selon l'une des revendications précédentes, **caractérisé en ce que** le matériau élastomère (22) entoure complètement la portion de surface (24) dans la direction périphérique.

6. Procédé selon l'une des revendications précédentes, **caractérisé en ce que** le matériau élastomère (22) remplit de façon sensiblement complète l'espace entre le corps de passage (15) mis en forme et le câble (11).

7. Procédé selon l'une des revendications précédentes, **caractérisé en ce que** le corps de passage (15) est mis en forme de manière telle que les portions d'extrémité (31) axiales mises en forme présentent une dimension extérieure qui est plus faible que celle de la portion centrale (32) du corps de passage (15).

8. Procédé selon l'une des revendications précédentes, **caractérisé en ce que** le corps de passage (15) est mis en forme de manière telle que les portions d'extrémité (31) axiales mises en forme présentent une dimension intérieure qui est plus faible que celle de la portion centrale (32) du corps de passage (15).

9. Procédé selon l'une des revendications précédentes, **caractérisé en ce que** les portions d'extrémité (31) du corps de passage (15) mis en forme sont appliquées directement contre la surface extérieure (21) du câble (11).

10. Procédé selon l'une des revendications précédentes, **caractérisé en ce que** le corps de passage (15) mis en forme présente une longueur axiale qui est supérieure à celle du matériau élastomère (22).

11. Procédé selon l'une des revendications précédentes, **caractérisé en ce que**, dans son état initial non mis en forme, le corps de passage (15) présente une forme cylindrique creuse.
